# EUROPÄISCHE PATENTSCHRIFT

(11) **EP 4 565 875 B1**
(45) Veröffentlichungstag und Bekanntmachung des Hinweises auf die Patenterteilung: **11.03.2026**
(21) Anmeldenummer: 23740962.8
(22) Anmeldetag: 04.07.2023
(51) Int. Cl.: G01N 25/18

(54) **VORRICHTUNG UND VERFAHREN ZUR MESSUNG EINER WÄRMELEITFÄHIGKEIT EINES PRÜFLINGS**
DEVICE AND METHOD FOR MEASURING THE THERMAL CONDUCTIVITY OF A TEST OBJECT
DISPOSITIF ET PROCÉDÉ DE MESURE DE CONDUCTIVITÉ THERMIQUE D'UN OBJET DE TEST

(30) Priorität: 03.08.2022 DE 102022002808
(43) Veröffentlichungstag der Anmeldung: 11.06.2025
(73) Patentinhaber: SEW-EURODRIVE GmbH & Co. KG, 76646 Bruchsal (DE)
(72) Erfinder: HAMMER, Marc, 76297 Stutensee (DE)
(86) Internationale Anmeldenummer: PCT/EP2023/068380
(87) Internationale Veröffentlichungsnummer: WO 2024/028021

(56) Entgegenhaltungen:
- DE-A1- 10 144 873
- DE-B4- 112016 004 973
- WU Y E ET AL: "Fabrication and characterization of thermal conductivity detectors (TCDs) of different flow channel and heater designs", SENSORS AND ACTUATORS A, vol. 100, no. 1, 15 August 2002 (2002-08-15), pages 37 - 45, XP004373759, ISSN: 0924-4247, DOI: 10.1016/S0924-4247(02)00144-9

## Beschreibung

Die Erfindung betrifft eine Vorrichtung zur Messung einer Wärmeleitfähigkeit eines Prüflings, wobei die Vorrichtung einen ersten Testkörper, einen zweiten Testkörper, eine Wärmequelle, mindestens einen ersten Temperatursensor zur Messung einer ersten Temperatur des ersten Testkörpers und mindestens einen zweiten Temperatursensor zur Messung einer zweiten Temperatur des zweiten Testkörpers umfasst. Die Erfindung betrifft auch ein Verfahren zur Messung einer Wärmeleitfähigkeit eines Prüflings mittels einer erfindungsgemäßen Vorrichtung.

Zur Abfuhr von Wärme, beispielsweise von einer elektronischen Schaltung auf einer Leiterplatte, ist es bekannt, Kühlkörper mittels einer Folie, Paste oder in anderer Form von Material mit der Leiterplatte zu verbinden. Das Material hat gegebenenfalls zusätzlich die Aufgabe der elektrischen Isolierung des Kühlkörpers von der Leiterplatte. Ein geeignetes Material, welches als "Thermal Interface Material" bezeichnet wird, füllt Lufteinschlüsse zwischen zwei Oberflächen, welche zwangsläufig durch Rauigkeiten der Oberflächen entstehen. Hierdurch wird der Wärmeübergang zwischen den Oberflächen verbessert, da die Wärmeleitfähigkeit der aufgefüllten Lufteinschlüsse deutlich erhöht wird. Ferner wird Thermal Interface Material zum Ausgleich von Toleranzen bei ausreichender Wärmeleitfähigkeit verwendet.

Zur Messung der Wärmeleitfähigkeit, beziehungsweise des thermischen Widerstandes, eines Prüflings aus einem Thermal Interface Material wird häufig die stationäre Zylindermethode gemäß ASTM D5470 verwendet. Hierbei wird der Prüfling zwischen zwei planparallelen Zylindern eingespannt und mit einem Wärmestrom beaufschlagt, welcher einen Rückschluss auf die Wärmeleitfähigkeit, beziehungsweise den thermischen Widerstand, des Prüflings schließen lässt. Der Prüfling kann mit einem konstanten Anpressdruck und variabler Dicke oder mit einem variablen Anpressdruck und konstanter Dicke getestet werden.

Aus der DE 11 2016 004 973 B4 sind eine Vorrichtung und ein Verfahren zur Messung der Wärmeleitfähigkeit eines Messobjekts bekannt. Dabei wird das Messobjekt zwischen zwei Halteelementen eingespannt. Ein Heizelement liegt an dem einem Halteelement an, ein Kühlelement liegt an dem anderen Halteelement an.

Aus der DE 101 44 873 A1 ist ein mikromechanischer Wärmeleitfähigkeitssensor bekannt, welcher eine durch Aussparung einer schlecht wärmeleitfähigen Grundplatte gebildete thermisch isolierte Membran umfasst.

Aus dem Dokument WU ET AL: "Fabrication and characterization of thermal conductivity detectors (TCDs) of different flow channel and heater designs", SENSORS AND ACTUATORS A, Bd. 100, Nr. 1, 15. August 2002 (2002-08-15), Seiten 37-45, XP0043737 59, ISSN: 0924-4247, DOI: 10.1016/S0924-4247(02)00144-9 sind ebenfalls Sensoren zur Messung von Wärmeleitfähigkeit bekannt.

Aus der WO 2019/145549 A1 sind eine Vorrichtung und ein Verfahren zur Messung der Wärmeleitfähigkeit einer Probe bekannt. Die Vorrichtung umfasst eine Temperatursensoranordnung mit mehreren Temperatursensoren zur Ermittlung von Temperaturmesswerten an mehreren Stellen.

Die Zylinder bestehen in der Regel aus Aluminiumlegierungen mit verhältnismäßig hoher Wärmeleitfähigkeit, beispielsweise EN AW 6060 oder EN AW 6063. Um den Wärmestrom durch den Prüfling möglichst genau zu bestimmen wird eine Temperaturmessung in den Zylindern durchgeführt. Dabei ist auch eine genaue Kenntnis der Wärmeleitfähigkeit der Zylinder erforderlich.

Die hieraus resultierende Problematik besteht darin, dass Aluminiumlegierungen nicht immer die gleiche Zusammensetzung aufweisen. Die Herstellung unterliegen Toleranzen in der Zusammensetzung, was dazu führt, dass jede Charge Abweichungen in den Materialeigenschaften aufweist. Somit weisen verschiedene Zylinder in der Regel voneinander abweichende Wärmeleitfähigkeiten auf. Somit liefern Messungen mit verschiedene Zylindern in der Regel verschiedene Ergebnisse für die Wärmeleitfähigkeit des Prüflings.

Der Erfindung liegt die Aufgabe zugrunde, eine Vorrichtung und ein Verfahren zur Messung einer Wärmeleitfähigkeit eines Prüflings weiterzubilden.

Die Aufgabe wird erfindungsgemäß durch eine Vorrichtung zur Messung einer Wärmeleitfähigkeit eines Prüflings mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zur Messung einer Wärmeleitfähigkeit eines Prüflings mit den in Anspruch 12 angegebenen Merkmalen gelöst.

Eine erfindungsgemäße Vorrichtung zur Messung einer Wärmeleitfähigkeit eines Prüflings umfasst einen ersten Testkörper, welcher eine erste Grundfläche sowie eine gegenüberliegende erste Stirnfläche aufweist, einen zweiten Testkörper, welcher eine zweite Grundfläche sowie eine gegenüberliegende zweite Stirnfläche aufweist, eine Wärmequelle, welche an der ersten Grundfläche des ersten Testkörpers angeordnet ist, mindestens einen ersten Temperatursensor zur Messung einer ersten Temperatur des ersten Testkörpers, und mindestens einen zweiten Temperatursensor zur Messung einer zweiten Temperatur des zweiten Testkörpers. Dabei sind die Testkörper derart angeordnet, dass der Prüfling zwischen den Stirnflächen der Testkörper positionierbar ist. Der erste Testkörper und der zweite Testkörper sind dabei aus Silizium gefertigt.

Silizium weist eine verhältnismäßig hohe Wärmeleitfähigkeit auf und ist somit zur Durchführung von Messungen von Wärmeleitfähigkeit geeignet. Industriell werden Wafer aus Silizium zur Herstellung von elektronischen Bauteilen gefertigt. Wafer sind Scheiben, die aus monokristallinem Silizium in Zylinderform geschnitten werden. Da solche Verfahren in Serienproduktionen eingesetzt werden, können Rohlinge zur Herstellung von Wafern kostengünstig erworben und als Testkörper eingesetzt werden. Auf Grund der hohen Reinheit des Siliziums ist die Wärmeleitfähigkeit der Testkörper konstant, es gibt nur sehr geringe Abweichung der Stoffdaten, insbesondere der Wärmeleitfähigkeit. Somit ist die Problematik der Abweichung von thermischen Werkstoffeigenschaften der Testkörper bei Verwendung von Aluminiumlegierungen im Prüfaufbau eliminierbar.

Gemäß einer vorteilhaften Weiterbildung der Erfindung umfasst die Vorrichtung ferner eine Wärmesenke, welche an der zweiten Grundfläche des zweiten Testkörpers angeordnet ist. Die Wärmesenke gestattet eine genauere Erfassung eines durch den ersten Testkörper, den Prüfling und den zweiten Testkörper fließenden Wärmestroms bei der Messung der Wärmeleitfähigkeit des Prüflings.

Gemäß einer vorteilhaften Ausgestaltung der Erfindung ist die Wärmesenke als Peltier-Element ausgebildet. Dabei ist eine heiße Seite des Peltier-Elements den Stirnflächen der Testkörper abgewandt, und eine kalte Seite des Peltier-Elements ist den Stirnflächen der Testkörper zugewandt. Wenn ein Strom durch das Peltier-Element fließt, so wird die kalte Seite des Peltier-Elements abgekühlt.

Gemäß einer vorteilhaften Ausgestaltung der Erfindung sind der erste Testkörper und der zweite Testkörper jeweils zylindrisch, insbesondere kreiszylindrisch, ausgebildet, und die Grundflächen der Testkörper erstrecken sich parallel zu den Stirnflächen der Testkörper. Derart ausgebildete Testkörper sind verhältnismäßig einfach als Rohlinge, insbesondere als monokristalline Rohlinge, zur Herstellung von Wafern verfügbar.

Gemäß einer bevorzugten Ausgestaltung der Erfindung sind der erste Testkörper und der zweite Testkörper jeweils aus monokristallinem Silizium gefertigt. Dadurch ist die Wärmeleitfähigkeit der Testkörper besonders konstant, Abweichungen der Stoffdaten, insbesondere der Wärmeleitfähigkeit, sind weiter verringert.

Gemäß einer vorteilhaften Ausgestaltung der Erfindung ist mindestens ein erster Temperatursensor an der ersten Stirnfläche des ersten Testkörpers angeordnet. Gemäß einer vorteilhaften Ausgestaltung der Erfindung ist mindestens ein zweiter Temperatursensor an der zweiten Stirnfläche des zweiten Testkörpers angeordnet. Somit sind die Temperatursensoren in unmittelbarem Kontakt mit Oberflächen des Prüflings.

Gemäß einer vorteilhaften Ausgestaltung der Erfindung ist mindestens ein erster Temperatursensor innerhalb des ersten Testkörpers, beabstandet von der ersten Stirnfläche und beabstandet von der ersten Grundfläche, angeordnet. Gemäß einer vorteilhaften Ausgestaltung der Erfindung ist mindestens ein zweiter Temperatursensor innerhalb des zweiten Testkörpers, beabstandet von der zweiten Stirnfläche und beabstandet von der zweiten Grundfläche, angeordnet.

Gemäß einer vorteilhaften Ausgestaltung der Erfindung ist der mindestens einen ersten Temperatursensor als diskretes Bauteil ausgebildet. Gemäß einer vorteilhaften Ausgestaltung der Erfindung ist der mindestens einen zweiten Temperatursensor als diskretes Bauteil ausgebildet. Derartige Temperatursensoren sind beispielsweise als Messwiderstände, beispielsweise als PT100-Wideratsnd bekannt, deren ohmscher Widerstand temperaturabhängig ist. Der Zusammenhang zwischen dem ohmschen Widerstand und der Temperatur ist vorzugsweise linear.

Gemäß einer vorteilhaften Ausgestaltung der Erfindung ist der mindestens einen ersten Temperatursensor als Dotierung des ersten Testkörpers ausgebildet. Gemäß einer vorteilhaften Ausgestaltung der Erfindung ist der mindestens einen zweiten Temperatursensor als Dotierung des zweiten Testkörpers ausgebildet. Die Verwendung von Silizium als Material für die Testkörper gestattet die Integration von zusätzlichen Funktionen, beispielsweise einer Temperaturmessung, durch gezieltes Einbringen von Dotierungen. Die Temperatursensoren sind somit in den Testkörpern integriert. Je nach Art der Dotierung ist der Zusammenhang zwischen dem ohmschen Widerstand der Dotierung und der Temperatur linear oder nichtlinear.

Gemäß einer vorteilhaften Weiterbildung der Erfindung ist die Wärmequelle als Dotierung des ersten Testkörpers ausgebildet. Die Verwendung von Silizium als Material für die Testkörper gestattet die Integration von zusätzlichen Funktionen, beispielsweise einer Erzeugung von Wärme, durch gezieltes Einbringen von Dotierungen. Die Wärmequelle ist somit in dem ersten Testkörper integriert. Ein durch die Dotierung fließender Strom erzeugt in der Dotierung einen Spannungsabfall, wodurch in der Dotierung Wärme erzeugt wird.

Gemäß einer anderen vorteilhaften Weiterbildung der Erfindung ist die Wärmequelle als Peltier-Element ausgebildet. Dabei ist eine heiße Seite des Peltier-Elements den Stirnflächen der Testkörper zugewandt, und eine kalte Seite des Peltier-Elements ist den Stirnflächen der Testkörper abgewandt. Wenn ein Strom durch das Peltier-Element fließt, so wird die heiße Seite des Peltier-Elements erwärmt.

Bei der Durchführung eines erfindungsgemäßen Verfahrens zur Messung einer Wärmeleitfähigkeit eines Prüflings mittels einer erfindungsgemäßen Vorrichtung wird zunächst der Prüfling zwischen den Stirnflächen der Testkörper positioniert. Mittels der Wärmequelle wird Wärmeenergie über die erste Grundfläche des ersten Testkörpers in die Vorrichtung eingebracht. Mittels des mindestens eines ersten Temperatursensors wird mindestens eine erste Temperatur des ersten Testkörpers gemessen. Mittels des mindestens eines zweiten Temperatursensors wird mindestens eine zweite Temperatur des zweiten Testkörpers gemessen. Aus der eingebrachten Wärmeenergie, der mindestens eine erste Temperatur und der mindestens eine zweite Temperatur wird die Wärmeleitfähigkeit des Prüflings berechnet.

Bei dem Prüfling handelt es sich insbesondere um eine Folie, Paste oder eine andere Form eines Materials, welches ein "Thermal Interface Material" darstellt. Ein solches Material ist verhältnismäßig weich und kompressibel. Bei der Messung der Wärmeleitfähigkeit des Prüflings wirkt ein Anpressdruck auf den Prüfling, wodurch der Prüfling eine Verformung erfährt. Dadurch wird der Prüfling zwischen dem ersten Testkörper und dem zweiten Testkörper eingespannt, insbesondere kraftschlüssig gehalten. Das erfindungsgemäße Verfahren gestattet eine verhältnismäßig genaue und reproduzierbare Messung der Wärmeleitfähigkeit des Prüflings.

Insbesondere ist das Ergebnis der Messung nur unwesentlich von den verwendeten Testkörpern abhängig. Die Verwendung einer baugleichen Vorrichtung mit anderen Testkörpern aus Silizium liefert gleiche Ergebnisse.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigt:

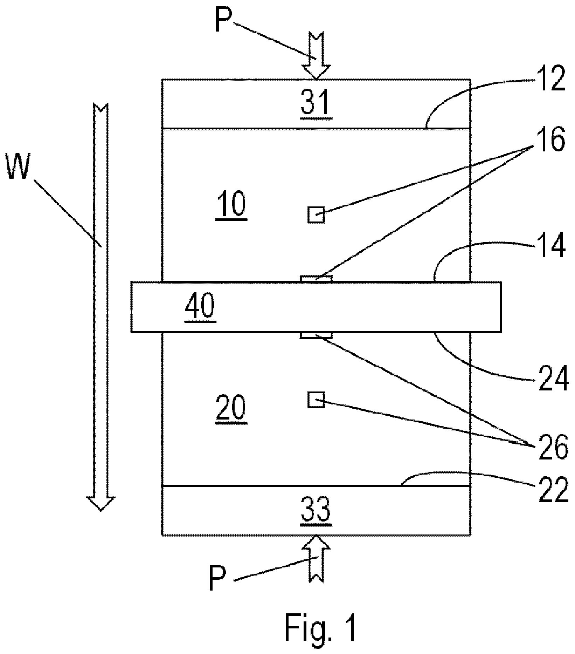

- Figur 1:: eine schematische Darstellung einer Vorrichtung zur Messung einer Wärmeleitfähigkeit eines Prüflings.

Figur 1 zeigt eine schematische Darstellung einer Vorrichtung zur Messung einer Wärmeleitfähigkeit eines Prüflings 40. Die Vorrichtung umfasst einen ersten Testkörper 10 und einen zweiten Testkörper 20. Der erste Testkörper 10 und der zweite Testkörper 20 sind jeweils aus Silizium gefertigt. Insbesondere sind der erste Testkörper 10 und der zweite Testkörper 20 jeweils aus monokristallinem Silizium gefertigt.

Der erste Testkörper 10 ist zylindrisch, insbesondere kreiszylindrisch, ausgebildet und weist eine erste Grundfläche 12 sowie eine der ersten Grundfläche 12 gegenüberliegende erste Stirnfläche 14 auf. Die erste Grundfläche 12 des ersten Testkörpers 10 erstreckt sich parallel zu der ersten Stirnfläche 14 des ersten Testkörpers 10.

Der zweite Testkörper 20 ist zylindrisch, insbesondere kreiszylindrisch, ausgebildet und weist eine zweite Grundfläche 22 sowie eine der zweiten Grundfläche 22 gegenüberliegende zweite Stirnfläche 24 auf. Die zweite Grundfläche 22 des zweiten Testkörpers 20 erstreckt sich parallel zu der zweiten Stirnfläche 24 des zweiten Testkörpers 20.

Zwischen dem ersten Testkörper 10 und dem zweiten Testkörper 20 ist der Prüfling 40 positioniert. Bei dem Prüfling 40 handelt es sich um eine Folie, Paste oder eine andere Form eines Materials, welches als "Thermal Interface Material" fungiert. In der hier gezeigten Darstellung ragt der Prüfling 40 seitlich geringfügig über die Testkörper 10, 20 hinaus. Der Prüfling 40 sollte im Durchmesser die Testkörper 10, 20 nicht wesentlich überschreiten, da sonst unerwünschte Wärmeverluste nach außen erhöht werden.

Die Testkörper 10, 20 sind derart angeordnet, dass die erste Stirnfläche 14 des ersten Testkörpers 10 der zweiten Stirnfläche 24 des zweiten Testkörpers 20 gegenüberliegt. Dabei erstreckt sich die erste Stirnfläche 14 parallel zu der zweiten Stirnfläche 24. Der Prüfling 40 ist dabei zwischen der ersten Stirnfläche 14 und der zweiten Stirnfläche 24 positioniert. Der Prüfling 40 liegt somit unmittelbar an der ersten Stirnfläche 14 und an der zweiten Stirnfläche 24 an.

Die Vorrichtung umfasst eine Wärmequelle 31. Die Wärmequelle 31 ist an der ersten Grundfläche 12 des ersten Testkörpers 10 angeordnet. Die Wärmequelle 31 ist beispielsweise in Form einer isolierten Heizspirale ausgebildet, welche an der ersten Grundfläche 12 anliegt oder mit der ersten Grundfläche 12 mechanisch verbunden, insbesondere verklebt, ist. Alternativ ist die Wärmequelle 31 als Dotierung des ersten Testkörpers 10 ausgebildet. Somit ist die Wärmequelle 31 in den ersten Testkörper 10 in Form einer Dotierung integriert.

Die Vorrichtung umfasst eine Wärmesenke 33. Die Wärmesenke 33 ist an der zweiten Grundfläche 22 des zweiten Testkörpers 20 angeordnet. Die Wärmesenke 33 ist beispielsweise in Form eines Kühlkörpers ausgebildet, welcher an der zweiten Grundfläche 22 anliegt oder mit der zweiten Grundfläche 22 mechanisch verbunden, insbesondere verklebt, ist. Die Wärmesenke 33 ist vorteilhaft flüssigkeitsgekühlt.

Die Vorrichtung umfasst vorliegend zwei erste Temperatursensoren 16. Die ersten Temperatursensoren 16 dienen jeweils zur Messung einer ersten Temperatur des ersten Testkörpers 10. Dabei misst jeder der ersten Temperatursensoren 16 die erste Temperatur an einer anderen Stelle des ersten Testkörpers 10.

Vorliegend ist einer der ersten Temperatursensoren 16 an der ersten Stirnfläche 14 des ersten Testkörpers 10 angeordnet. Dieser erste Temperatursensor 16 ist somit in unmittelbarem Kontakt mit einer Oberfläche des Prüflings 40. Es ist auch denkbar, möglichst nahe der ersten Stirnfläche 14 mehrere PT100-Temperaturfülehr radial durch Bohrungen einzulassen.

Vorliegend ist auch einer der ersten Temperatursensoren 16 innerhalb des ersten Testkörpers 10 angeordnet. Dieser erste Temperatursensor 16 ist somit beabstandet von der ersten Stirnfläche 14 und beabstandet von der ersten Grundfläche 12 angeordnet.

Vorliegend ist einer der ersten Temperatursensoren 16 als diskretes Bauteil ausgebildet. Beispielsweise ist dieser erste Temperatursensor 16 in Form eines Messwiderstandes ausgebildet, dessen ohmscher Widerstand temperaturabhängig ist.

Vorliegend ist auch einer der ersten Temperatursensoren 16 als Dotierung des ersten Testkörpers 10 ausgebildet. Somit ist dieser erste Temperatursensor 16 in den ersten Testkörper 10 in Form einer Dotierung integriert.

Die Vorrichtung umfasst vorliegend zwei zweite Temperatursensoren 26. Die zweiten Temperatursensoren 26 dienen jeweils zur Messung einer zweiten Temperatur des zweiten Testkörpers 20. Dabei misst jeder der zweiten Temperatursensoren 26 die zweite Temperatur an einer anderen Stelle des zweiten Testkörpers 20.

Vorliegend ist einer der zweiten Temperatursensoren 26 an der zweiten Stirnfläche 24 des zweiten Testkörpers 20 angeordnet. Dieser zweite Temperatursensor 26 ist somit in unmittelbarem Kontakt mit einer Oberfläche des Prüflings 40.

Vorliegend ist auch einer der zweiten Temperatursensoren 26 innerhalb des zweiten Testkörpers 20 angeordnet. Dieser zweite Temperatursensor 26 ist somit beabstandet von der zweiten Stirnfläche 24 und beabstandet von der zweiten Grundfläche 22 angeordnet.

Vorliegend ist einer der zweiten Temperatursensoren 26 als diskretes Bauteil ausgebildet. Beispielsweise ist dieser zweite Temperatursensor 16 in Form eines Messwiderstandes ausgebildet, dessen ohmscher Widerstand temperaturabhängig ist.

Vorliegend ist auch einer der zweiten Temperatursensoren 26 als Dotierung des zweiten Testkörpers 20 ausgebildet. Somit ist dieser zweite Temperatursensor 26 in den zweiten Testkörper 20 in Form einer Dotierung integriert.

Zur Messung der Wärmeleitfähigkeit des Prüflings 40 mittels der Vorrichtung wird der Prüfling 40 zunächst zwischen den Stirnflächen 14, 24 der Testkörper 10, 20 positioniert, wie in der Darstellung gezeigt.

Dann wird auf die Wärmequelle 31 oder unmittelbar auf die erste Grundfläche 12 des ersten Testkörpers 10 eine Kraft in Richtung auf den Prüfling 40 zu ausgeübt. Ebenso wird auf die Wärmesenke 33 oder unmittelbar auf die zweite Grundfläche 22 des zweiten Testkörpers 20 eine Kraft in Richtung auf den Prüfling 40 zu ausgeübt. Diese Kräfte verursachen jeweils einen auf den Prüfling 40 wirkenden Anpressdruck P. Der Prüfling 40 ist somit zwischen dem ersten Testkörper 10 und dem zweiten Testkörper 20 eingespannt, insbesondere kraftschlüssig gehalten.

Es ist denkbar, einen konstanten Anpressdruck P auf den Prüfling 40 auszuüben. In diesem Fall wird der Prüfling 40 in Abhängigkeit von der Höhe des Anpressdrucks P unterschiedlich verformt, weist also eine von dem Anpressdruck P abhängige Dicke auf. Die Dicke des Prüflings 40 entspricht einem Abstand der ersten Stirnfläche 14 zu der zweiten Stirnfläche 24.

Ebenfalls ist es denkbar, die Dicke des Prüflings 40 durch Vorgabe des Abstandes der ersten Stirnfläche 14 zu der zweiten Stirnfläche 24 konstant zu halten. In diesem Fall ist die Höhe des Anpressdrucks P variabel und hängt von der vorgegebenen Dicke des Prüflings 40 ab.

Mittels der Wärmequelle 31 wird Wärmeenergie über die erste Grundfläche 12 des ersten Testkörpers 10 in die Vorrichtung eingebracht. Die eingebrachte Wärmeenergie verursacht einen Wärmestrom W, welcher durch den ersten Testkörper 10, den Prüfling 40 und den zweiten Testkörper 20 zu der Wärmesenke 33 an der zweiten Grundfläche 22 des zweiten Testkörpers 20 fließt.

Mittels der ersten Temperatursensoren 16 werden erste Temperaturen des ersten Testkörpers 10 an mehreren Stellen des ersten Testkörpers 10 gemessen. Mittels der zweiten Temperatursensoren 26 werden zweite Temperaturen des zweiten Testkörpers 20 an mehreren Stellen des zweiten Testkörpers 20 gemessen.

Aus der eingebrachten Wärmeenergie, den gemessenen ersten Temperaturen und den gemessenen zweiten Temperaturen wird dann die Wärmeleitfähigkeit des Prüflings 40 berechnet.

In die besagte Berechnung der Wärmeleitfähigkeit des Prüflings 40 gehen auch weitere Größen, insbesondere die Anordnung der Temperatursensoren 16, 26 in den Testkörpern 10, 20, sowie die Wärmeleitfähigkeit der Testkörper 10, 20, mit ein. Dabei handelt es sich jedoch jeweils um konstante Größen, die bereits vor Beginn der Messung bekannt sind.

### Bezugszeichenliste

- 10: erster Testkörper
- 12: erste Grundfläche
- 14: erste Stirnfläche
- 16: erster Temperatursensor
- 20: zweiter Testkörper
- 22: zweite Grundfläche
- 24: zweite Stirnfläche
- 26: zweiter Temperatursensor
- 31: Wärmequelle
- 33: Wärmesenke
- 40: Prüfling
- W: Wärmestrom
- P: Anpressdruck

## Patentansprüche

1. Vorrichtung zur Messung einer Wärmeleitfähigkeit eines Prüflings (40), umfassend
einen ersten Testkörper (10), welcher eine erste Grundfläche (12) sowie eine gegenüberliegende erste Stirnfläche (14) aufweist,
einen zweiten Testkörper (20), welcher eine zweite Grundfläche (22) sowie eine gegenüberliegende zweite Stirnfläche (24) aufweist,
eine Wärmequelle (31), welche an der ersten Grundfläche (12) des ersten Testkörpers (10) angeordnet ist, und
mindestens einen ersten Temperatursensor (16) zur Messung einer ersten Temperatur des ersten Testkörpers (10), und
mindestens einen zweiten Temperatursensor (26) zur Messung einer zweiten Temperatur des zweiten Testkörpers (20), wobei
die Testkörper (10, 20) derart angeordnet sind, dass
der Prüfling (40) zwischen den Stirnflächen (14, 24) der Testkörper (10, 20) positionierbar ist,
**dadurch gekennzeichnet, dass**
der erste Testkörper (10) und der zweite Testkörper (20) aus Silizium gefertigt sind.

2. Vorrichtung nach Anspruch 1, **dadurch gekennzeichnet, dass**
eine Wärmesenke (33) an der zweiten Grundfläche (22) des zweiten Testkörpers (20) angeordnet ist.

3. Vorrichtung nach Anspruch 2, **dadurch gekennzeichnet, dass**
die Wärmesenke (33) als Peltier-Element ausgebildet ist, wobei
eine heiße Seite des Peltier-Elements den Stirnflächen (14, 24) der Testkörper (10, 20) abgewandt ist, und dass
eine kalte Seite des Peltier-Elements den Stirnflächen (14, 24) der Testkörper (10, 20) der zugewandt ist.

4. Vorrichtung nach einem der vorangegangenen Ansprüche, **dadurch gekennzeichnet, dass** der erste Testkörper (10) und der zweite Testkörper (20) jeweils zylindrisch ausgebildet sind, und dass
die Grundflächen (12, 22) der Testkörper (10, 20) sich parallel zu den Stirnflächen (14, 24) der Testkörper (10, 20) erstrecken.

5. Vorrichtung nach einem der vorangegangenen Ansprüche, **dadurch gekennzeichnet, dass** der erste Testkörper (10) und der zweite Testkörper (20) jeweils aus monokristallinem Silizium gefertigt sind.

6. Vorrichtung nach einem der vorangegangenen Ansprüche, **dadurch gekennzeichnet, dass** mindestens ein erster Temperatursensor (16) an der ersten Stirnfläche (14) des ersten Testkörpers (10) angeordnet ist, und/oder dass
mindestens ein zweiter Temperatursensor (26) an der zweiten Stirnfläche (24) des zweiten Testkörpers (20) angeordnet ist.

7. Vorrichtung nach einem der vorangegangenen Ansprüche, **dadurch gekennzeichnet, dass** mindestens ein erster Temperatursensor (16) innerhalb des ersten Testkörpers (10), beabstandet von der ersten Stirnfläche (14) und beabstandet von der ersten Grundfläche (12), angeordnet ist, und/oder dass
mindestens ein zweiter Temperatursensor (26) innerhalb des zweiten Testkörpers (20), beabstandet von der zweiten Stirnfläche (24) und beabstandet von der zweiten Grundfläche (22), angeordnet ist.

8. Vorrichtung nach einem der vorangegangenen Ansprüche, **dadurch gekennzeichnet, dass** der mindestens einen erste Temperatursensor (16) als diskretes Bauteil ausgebildet ist, und/oder dass
der mindestens einen zweite Temperatursensor (26) als diskretes Bauteil ausgebildet ist.

9. Vorrichtung nach einem der vorangegangenen Ansprüche, **dadurch gekennzeichnet, dass** der mindestens eine erste Temperatursensor (16) als Dotierung des ersten Testkörpers (10) ausgebildet ist, und/oder dass
der mindestens eine zweite Temperatursensor (26) als Dotierung des zweiten Testkörpers (20) ausgebildet ist.

10. Vorrichtung nach einem der vorangegangenen Ansprüche, **dadurch gekennzeichnet, dass** die Wärmequelle (31) als Dotierung des ersten Testkörpers (10) ausgebildet ist.

11. Vorrichtung nach einem der Ansprüche 1 bis 9, **dadurch gekennzeichnet, dass** die Wärmequelle (31) als Peltier-Element ausgebildet ist, wobei
eine heiße Seite des Peltier-Elements den Stirnflächen (14, 24) der Testkörper (10, 20) zugewandt ist, und dass
eine kalte Seite des Peltier-Elements den Stirnflächen (14, 24) der Testkörper (10, 20) abgewandt ist.

12. Verfahren zur Messung einer Wärmeleitfähigkeit eines Prüflings (40),
mittels einer Vorrichtung nach einem der vorangegangenen Ansprüche, wobei der Prüfling (40) zwischen den Stirnflächen (14, 24) der Testkörper (10, 20) positioniert wird; mittels der Wärmequelle (31) Wärmeenergie über die erste Grundfläche (12) des ersten Testkörpers (10) in die Vorrichtung eingebracht wird;
mittels des mindestens einen ersten Temperatursensors (16) mindestens eine erste Temperatur des ersten Testkörpers (10) gemessen wird, und
mittels des mindestens einen zweiten Temperatursensors (26) mindestens eine zweite Temperatur des zweiten Testkörpers (20) gemessen wird;
aus der eingebrachten Wärmeenergie, der mindestens einen ersten Temperatur und der mindestens einen zweiten Temperatur die Wärmeleitfähigkeit des Prüflings (40) berechnet wird.

## Claims

1. A device for measuring the thermal conductivity of a test object (40), comprising
a first test body (10), which has a first base (12) and also a first end face (14) lying opposite,
a second test body (20), which has a second base (22) and also a second end face (24) lying opposite,
a heat source (31), which is arranged on the first base (12) of the first test body (10), and
at least one first temperature sensor (16) for measuring a first temperature of the first test body (10), and
at least one second temperature sensor (26) for measuring a second temperature of the second test body (20), wherein
the test bodies (10, 20) are arranged in such a way that
the test object (40) can be positioned between the end faces (14, 24) of the test bodies (10, 20),
**characterised in that**
the first test body (10) and the second test body (20) are manufactured from silicon.

2. A device according to claim 1, **characterised in that**
a heat sink (33) is arranged on the second base (22) of the second test body (20).

3. A device according to claim 2, **characterised in that**
the heat sink (33) is formed as a Peltier element, with
a hot side of the Peltier element facing away from the end faces (14, 24) of the test bodies (10, 20), and **in that**
a cold side of the Peltier element faces the end faces (14, 24) of the test bodies (10, 20) [of the].

4. A device according to one of the preceding claims, **characterised in that**
the first test body (10) and the second test body (20) are each cylindrical in form, and **in that**
the bases (12, 22) of the test bodies (10, 20) extend parallel to the end faces (14, 24) of the test bodies (10, 20).

5. A device according to one of the preceding claims, **characterised in that** the first test body (10) and the second test body (20) are each manufactured from monocrystalline silicon.

6. A device according to one of the preceding claims, **characterised in that**
at least one first temperature sensor (16) is arranged on the first end face (14) of the first test body (10), and/or **in that**
at least one second temperature sensor (26) is arranged on the second end face (24) of the second test body (20).

7. A device according to one of the preceding claims, **characterised in that**
at least one first temperature sensor (16) is arranged within the first test body (10), spaced apart from the first end face (14) and spaced apart from the first base (12), and/or **in that**
at least one second temperature sensor (26) is arranged within the second test body (20), spaced apart from the second end face (24) and spaced apart from the second base (22).

8. A device according to one of the preceding claims, **characterised in that**
the at least one first temperature sensor (16) is formed as a discrete component, and/or in that
the at least one second temperature sensor (26) is formed as a discrete component.

9. A device according to one of the preceding claims, **characterised in that**
the at least one first temperature sensor (16) is formed as a doping means of the first test body (10), and/or **in that**
the at least one second temperature sensor (26) is formed as a doping means of the second test body (20).

10. A device according to one of the preceding claims, **characterised in that** the heat source (31) is formed as a doping means of the first test body (10).

11. A device according to one of claims 1 to 9, **characterised in that** the heat source (31) is formed as a Peltier element, with
a hot side of the Peltier element facing the end faces (14, 24) of the test bodies (10, 20), and **in that**
a cold side of the Peltier element faces away from the end faces (14, 24) of the test bodies (10, 20).

12. A method for measuring the thermal conductivity of a test object (40),
by means of a device according to one of the preceding claims, wherein
the test object (40) is positioned between the end faces (14, 24) of the test bodies (10, 20);
by means of the heat source (31) thermal energy is introduced into the device by way of the first base (12) of the first test body (10);
by means of the at least one first temperature sensor (16) at least one first temperature of the first test body (10) is measured, and
by means of the at least one second temperature sensor (26) at least one second temperature of the second test body (20) is measured;
the thermal conductivity of the test object (40) is calculated from the thermal energy introduced, the at least one first temperature and the at least one second temperature.

## Revendications

1. Dispositif de mesure de la conductivité thermique d'un échantillon (40), comprenant un premier corps de test (10) qui présente une première surface de base (12) et une première surface frontale (14) opposée, un second corps de test (20) qui présente une seconde surface de base (22) et une seconde surface frontale (24) opposée,
une source de chaleur (31) agencée au niveau de la première base (12) du premier corps de test (10), et
au moins un premier capteur de température (16) permettant de mesurer une première température du premier corps de test (10), et
au moins un second capteur de température (26) permettant de mesurer une seconde température du second corps de test (20),
les corps de test (10, 20) étant agencés de telle manière que
l'échantillon (40) peut être positionné entre les surfaces frontales (14, 24) des corps de test (10, 20),
**caractérisé en ce que**
le premier corps de test (10) et le second corps de test (20) sont réalisés en silicium.

2. Dispositif selon la revendication 1, **caractérisé en ce que**
un dissipateur thermique (33) est agencé au niveau de la seconde surface de base (22) du second corps de test (20).

3. Dispositif selon la revendication 2, **caractérisé en ce que**
le dissipateur thermique (33) est réalisé sous la forme d'un élément Peltier,
un côté chaud de l'élément Peltier se détournant des surfaces frontales (14, 24) des corps de test (10, 20), et
un côté froid de l'élément Peltier étant tourné vers les surfaces frontales (14, 24) des corps de test (10, 20).

4. Dispositif selon l'une quelconque des revendications précédentes, **caractérisé en ce que**
le premier corps de test (10) et le second corps de test (20) sont respectivement de forme cylindrique, et **en ce que**
les surfaces de base (12, 22) des corps de test (10, 20) s'étendent parallèlement aux surfaces frontales (14, 24) des corps de test (10, 20).

5. Dispositif selon l'une quelconque des revendications précédentes, **caractérisé en ce que**
le premier corps de test (10) et le second corps de test (20) sont respectivement produits à partir de silicium monocristallin.

6. Dispositif selon l'une quelconque des revendications précédentes, **caractérisé en ce que**
au moins un premier capteur de température (16) est agencé au niveau de la première surface frontale (14) du premier corps de test (10), et/ou **en ce que** au moins un second capteur de température (26) est agencé au niveau de la seconde surface frontale (24) du second corps de test (20).

7. Dispositif selon l'une quelconque des revendications précédentes, **caractérisé en ce que**
au moins un premier capteur de température (16) est agencé à l'intérieur du premier corps de test (10), à distance de la première surface frontale (14) et à distance de la première surface de base (12), et/ou **en ce que**
au moins un second capteur de température (26) est agencé à l'intérieur du second corps de test (20), à distance de la seconde surface frontale (24) et à distance de la seconde surface de base (22).

8. Dispositif selon l'une quelconque des revendications précédentes, **caractérisé en ce que**
le au moins un premier capteur de température (16) est réalisé sous la forme d'un composant discret, et/ou **en ce que**
le au moins un second capteur de température (26) est réalisé sous la forme d'un composant discret.

9. Dispositif selon l'une quelconque des revendications précédentes, **caractérisé en ce que**
le au moins un premier capteur de température (16) est réalisé sous la forme d'un dopage du premier corps de test (10), et/ou **en ce que**
le au moins un second capteur de température (26) est réalisé sous la forme d'un dopage du second corps de test (20).

10. Dispositif selon selon l'une quelconque des revendications précédentes, **caractérisé en ce que**
la source de chaleur (31) est réalisée sous la forme d'un dopage du premier corps de test (10).

11. Dispositif selon l'une quelconque des revendications 1 à 9, **caractérisé en ce que** le dissipateur thermique (31) est réalisé sous la forme d'un élément Peltier,
un côté chaud de l'élément Peltier étant tourné vers les surfaces frontales (14, 24) des corps de test (10, 20), et
un côté froid de l'élément Peltier se détournant des surfaces frontales (14, 24) des corps de test (10, 20).

12. Procédé de mesure de la conductivité thermique d'un échantillon (40),
au moyen d'un dispositif selon l'une quelconque des revendications précédentes, l'échantillon (40) pouvant être positionné entre les surfaces frontales (14, 24) des corps de test (10, 20) ;
de l'énergie thermique étant introduite dans le dispositif au moyen de la source de chaleur (31) par l'intermédiaire de la première surface de base (12) du premier corps de test (10) ;
au moins une première température du premier corps de test (10) étant mesurée au moyen du au moins un premier capteur de température (16), et
au moins une seconde température du second corps de test (20) étant mesurée au moyen du au moins un second capteur de température (26) ;
la conductivité thermique de l'échantillon (40) étant calculée à partir de l'énergie thermique introduite, de la au moins une première température et de la au moins une seconde température.
